# EUROPÄISCHE PATENTSCHRIFT

(11) **EP 1 826 687 B1**
(45) Veröffentlichungstag und Bekanntmachung des Hinweises auf die Patenterteilung: **15.06.2011**
(21) Anmeldenummer: 06004077.1
(22) Anmeldetag: 28.02.2006
(51) Int. Cl.: G06F 17/30, G06F 17/21

(54) **Verfahren sowie Einrichtung zur programmgestützten Handhabung einer technischen Dokumentation**
Method and device for program supported handling of technical documentation
Procédé et dispositif destinés à la manipulation assistée par programme d'une documentation technique

(43) Veröffentlichungstag der Anmeldung: 29.08.2007
(73) Patentinhaber: Continental Automotive GmbH, 30165 Hannover (DE)
(72) Erfinder: Berentroth, Lutz, 93055 Burgweinting (DE); Miener, Björn, 93086 Wörth a. d. Donau (DE); Stetter, Robert, 93055 Regensburg-Burgweinting (DE)

(56) Entgegenhaltungen:
- EP-A- 1 560 131
- DE-A1- 10 203 369

## Beschreibung

Die vorliegende Erfindung betrifft die Handhabung einer technischen Dokumentation, betreffend eine technische Einrichtung, die in elektronischer Form in einer Speichereinrichtung eines Rechnersystems (10) gespeichert ist, wobei ein auf dem Rechnersystem ablaufendes Handhabungsprogramm vorgesehen ist, mittels welchem über eine Mensch-Maschine-Schnittstelle (16, 18) Dokumentationsanforderungen eines Benutzers in das Rechnersystem eingebbar sind und mittels welchem basierend auf der aktuellen Dokumentationsanforderung aus der Dokumentation (12) eine angepasste Dokumentation (14) erzeugt und über die Mensch-Maschine-Schnittstelle ausgegeben wird. Ein solches Verfahren ist aus der EP 1 560 131 A2 bekannt. Insbesondere betrifft die Erfindung z. B. die Handhabung von sehr umfangreichen technischen Dokumentationen für so genannte Motorsteuergeräte, wie sie in modernen Kraftfahrzeugen zur Steuerung einer Brennkraftmaschine und typischerweise auch zur Steuerung von weiteren elektrischen oder elektronischen Fahrzeugkomponenten eingesetzt werden.

Die Komplexität von derartigen Motorsteuergeräten hat in den letzten Jahren so stark zugenommen, dass die Beschreibung sämtlicher Funktionen bzw. Funktionsalgorithmen in Papierform z. B. etwa 9.000 Seiten umfasst. Die Einarbeitung in diese Funktionen wie auch die Analyse von Problemen bei der Entwicklung und Weiterentwicklung von Motorsteuergeräten gestaltet sich dementsprechend aufwendig.

Es ist daher eine Aufgabe der vorliegenden Erfindung, die Handhabung einer technischen Dokumentation der eingangs genannten Art für den Benutzer zu vereinfachen.

Diese Aufgabe wird gelöst durch ein Verfahren nach Anspruch 1 bzw. eine Einrichtung nach Anspruch 6. Die abhängigen Ansprüche betreffen vorteilhafte Weiterbildungen der Erfindung.

Für die Erfindung wesentlich ist die mittels eines auf einem Rechnersystem ablaufenden Handhabungsprogramms gesteuerte Erzeugung und Ausgabe einer angepassten Dokumentation in Abhängigkeit von Dokumentationsanforderungen, die von einem Benutzer dem Rechnersystem eingebbar sind. Die Dokumentationsanforderungen können sich z. B. auf wenigstens eine der Funktionen der technischen Einrichtung beziehen.

Es ist vorgesehen, dass das Erzeugen der angepassten Dokumentationen ein Verknüpfen mit wenigstens einem Programmwerkzeug umfasst, welches der aktuellen Dokumentationsanforderung zugeordnet ist, zur Unterstützung des Benutzers bei der Analyse von Fragestellungen. Solche Programmwerkzeuge sind dadurch gekennzeichnet, dass diese dem Benutzer nicht lediglich eine fest vorgegebene Information (Extrakt aus der technischen Dokumentation) liefern, etwa in graphischer und/oder durch Text dargebotenen Form, sondern dem Benutzer eine Interaktionsmöglichkeit bieten.

Wenn die Dokumentation ein Motorsteuergerät betrifft, so können Programmwerkzeuge z. B. eine bestimmte Applikation des Motorsteuergeräts betreffen und hierbei in Abhängigkeit von Benutzereingaben Funktionsdarstellungen erzeugen, die einen für den Benutzer größeren Informationsgehalt aufweisen. Alternativ oder zusätzlich können solche Werkzeuge z. B. die Ausgabe von Eingangsgrößen und/oder Ausgangsgrößen mit aktuellen Werten für eine bestimmte Funktion des Motorsteuergeräts vorsehen, so dass der Benutzer gewissermaßen verschiedene Betriebszustände der betreffenden Steuergerätfunktionalität simulieren kann. In einer diesbezüglichen Weiterbildung ist vorgesehen, dass im Rahmen einer solchen Werkzeugbedienung bzw. Simulation vom Benutzer festgelegte oder aufgrund der Benutzereingaben erhaltene Größen (z. B. Signalwerte an Ein- und Ausgängen des Steuergeräts) temporär speicherbar sind, so dass diese Größen auch für nachfolgend veränderte Dokumentationsanforderungen für die dann erzeugten angepassten Dokumentationen zur Verfügung stehen.

Die Erfindung ermöglicht damit eine beträchtliche Vereinfachung der Handhabung, wenn es etwa darum geht, ein bestimmtes technisches Problem der technischen Einrichtung zu analysieren und/oder Informationstexte aus der technischen Dokumentation zu lesen, die sich auf eine vom Benutzer vorgegebene Fragestellung oder Thematik beziehen. Insbesondere kann hierfür eine elektronisch erzeugte angepasste Dokumentation auf die aktuell für den Benutzer besonders relevanten bzw. notwendigen Informationen angepasst werden, um den Benutzer bei der Lösung bestimmter Aufgaben gezielter zu unterstützen. Die Erfindung verbessert insbesondere bei sehr umfangreichen technischen Dokumentationen deren Analysefähigkeit und ermöglicht eine drastische Zeitersparnis bei der Handhabung der Dokumentation durch den Benutzer.

In einem bevorzugten Anwendungsfall stellt die technische Einrichtung, auf welche sich die technische Dokumentation bezieht, eine mikroprozessorgesteuerte Einrichtung dar, insbesondere z. B. ein Motorsteuergerät für ein Kraftfahrzeug.

Für die Gestaltung der Mensch-Maschine-Schnittstelle des Rechnersystems, nachfolgend auch kurz als "MMS" bezeichnet, kann auf an sich aus dem Bereich der Rechnertechnik bekannte Konzepte zurückgegriffen werden. In einer bevorzugten Ausführungsform stellt die MMS für die Benutzereingaben bildschirmgestützte Eingabe- und/oder Auswahldialoge bereit, so dass der Benutzer durch Bedienung von Eingabemitteln (z. B. Tastatur, Zeigegeräte etc.) eine gewünschte Dokumentationsanforderung z. B. aus einer graphisch und/oder durch Text dargestellten Menüstruktur auswählen kann.

Mit der MMS des Rechnersystems kann die zur Ausgabe gebrachte Information vorteilhaft zur Bedarfszeit an die momentane Fragestellung des Benutzers angepasst werden. Bei einer Dokumentation eines Motorsteuergeräts kann diese Auswahl sich z. B. auf einen ganz bestimmten Applikationsschritt einer Funktionalität des betreffenden Geräts beziehen. Zusätzlich bezieht sich die vom Benutzer bestimmte Dokumentationsanforderung auf dessen Aufgabe bzw. dessen "Rolle" . Aufgaben können z. B. sein: "Entwicklung einer Basisapplikation", "Diagnose eines bestimmten Fehlers", "Weiterentwicklung bzw. Verbesserung einer Funktion" etc. Mögliche Rollen eines Benutzers können z. B. sein: "Applikateur", "Entwickler" bzw. "Funktionsentwickler", "Anwender (Kunde)", "Serviceperson" etc. Die Dokumentationsanforderung stellt einen oder mehrere Parameter dar, die in programmgesteuerter Weise bei der Anpassung der Dokumentation berücksichtigt werden.

In einer bevorzugten Ausführungsform ist vorgesehen, dass das Erzeugen der angepassten Dokumentation ein Ausblenden nicht benötigter Informationen aus der Dokumentation umfasst.

Bei den nicht benötigten Informationen kann es sich z. B. um detaillierte technische Daten und/oder Kennfelder handeln, die zur Analyse einer bestimmten Funktion der technischen Einrichtung eher hinderlich sind. Das Ausblenden kann auch mehrstufig in dem Sinne vorgesehen sein, dass durch eine Detailliertheitsangabe als Bestandteil der Dokumentationsanforderung vom Benutzer bestimmt werden kann, in welchem Umfang tendenziell unwichtige Informationen ausgeblendet werden. Falls die Dokumentationsanforderung gemäß dem vorstehend erläuterten "Rollenkonzept" die Angabe einer Rolle des Benutzers beinhaltet, so kann beispielsweise für einen "Anwender" vorgesehen sein, dass in der angepassten Dokumentation lediglich technische Informationen verbleiben, die aus Anwendersicht relevant sind.

In einer Ausführungsform ist vorgesehen, dass die angepasste Dokumentation wenigstens teilweise aus Dokumentationsabschnitten der gespeicherten Dokumentation besteht, wobei diese Dokumentationsabschnitte innerhalb der Dokumentation in einer vorgegebenen Reihenfolge angeordnet sind, und wobei die Reihenfolge der dem Benutzer mit der angepassten Dokumentation dargebotenen Dokumentationsabschnitte abhängig von der momentanen Dokumentationsanforderung bestimmt wird. In diesem Fall können die dargebotenen Dokumentationsabschnitte also insbesondere eine andere Reihenfolge besitzen als in der gespeicherten Dokumentation. Die dargebotene Reihenfolge kann in dieser Weise individuell an die Rolle des Benutzers bzw. dessen Aufgabenstellung angepasst werden.

In einer Ausführungsform ist vorgesehen, dass das Erzeugen der angepassten Dokumentation ein Einblenden von zusätzlichen Statusinformationen umfasst. Bei den Statusinformationen kann es sich zunächst z. B. um eine visuelle Ausgabe der vorangegangenen Dokumentationsanforderung handeln, welche dem Benutzer neben der eigentlichen Dokumentation dargeboten wird. Eine derartige Statusinformation erleichtert dem Benutzer die "Navigation" in der technischen Dokumentation. Alternativ oder zusätzlich können solche Statusinformationen auch spezielle Hinweise umfassen, welche über die bloße Darstellung der eingegebenen Dokumentationsanforderung hinausgehen. Beispielsweise können in Abhängigkeit von der momentanen Dokumentationsanforderung bestimmte Text- oder Bildinformationen innerhalb der angepassten Dokumentation visuell hervorgehoben werden, wobei diese Hervorhebungen insbesondere z. B. einen Hinweis auf die Möglichkeit des Abrufs bzw. eines Sprungs zu einer Detailinformation darstellen können. Letzteres ist an sich z. B. für so genannte HTML-Dokumente bekannt, bei welchen z. B. eine Unterstreichung einer Textinformation den Hinweis auf eine "Verknüpfung" darstellt, die vom Benutzer leicht aufgerufen werden kann, um zu einem anderen Abschnitt der Gesamtdokumentstruktur zu springen. Im Rahmen der Erfindung sind derartige Verknüpfungen besonders interessant, wenn deren Existenz bzw. Anzahl und Art von der momentanen Dokumentationsanforderung abhängt. Dies kann z. B. bedeuten, dass Benutzer mit verschiedenen Rollen und/oder verschiedenen Aufgabenstellungen in ein und demselben Dokumentationsabschnitt einer dargebotenen angepassten Dokumentation verschiedene Verknüpfungen angeboten bekommen.

Solche speziellen Hinweise können z. B. die momentane Dokumentationsanforderung für den Benutzer erläutern, etwa um Missverständnissen bei der Eingabe bzw. Auswahl solcher Dokumentationsanforderungen vorzubeugen. Ferner können spezielle Hinweise Informationen enthalten, die dazu genutzt werden können, Entscheidungen für den Weg zum Auffinden und/oder Lösen von technischen Problemen der betreffenden Einrichtung zu treffen. So können insbesondere z. B. Hinweise betreffend die weitere Navigation des Benutzers in der Dokumentation gegeben werden, z. B. in Form von einer Auswahl an besonders nützlichen Dokumentationsanforderungen, die sich an eine momentane Anforderung anschließen könnten. Hierfür sind durch das Handhabungsprogramm "Verzweigungsbäume" vorzusehen, welche ausgehend von einer bestimmten Dokumentationsanforderung eine oder mehrere Folgeanforderungen definieren, damit diese dem Benutzer bedarfsgerecht angeboten werden können. Auch die oben erläuterten, abhängig von der momentanen Dokumentationsanforderung generierten "Verknüpfungen" sind in diesem Sinne eine Navigationshilfe für den Benutzer.

Die Ausgabe der angepassten Dokumentation wie auch der gegebenenfalls vorgesehenen Statusinformationen, Hinweise oder dergleichen erfolgt bevorzugt auf einem Bildschirm des Rechnersystems, bei welchem z. B. ein Bildschirmbereich für die eigentliche Dokumentationsausgabe und ein davon abgesetzter Bildschirmbereich zur Ausgabe von Statusinformationen oder anderer, nicht unmittelbar die technische Dokumentation betreffenden Informationen reserviert sein kann. Solche anderen Informationen (z. B. visuelle Ausgaben von Programmwerkzeugen) werden unten noch erläutert.

Anstatt des oder der erwähnten abgesetzten Bildschirmbereiche können auch ein oder mehrere separate Bildschirme vorgesehen sein, die ebenfalls Bestandteil des verwendeten Rechnersystems sind.

In einer Ausführungsform ist vorgesehen, dass der Benutzer über die MMS die gespeicherte Dokumentation auch ändern kann. Hierbei ist es bevorzugt, dass die Änderungsmöglichkeiten vom Handhabungsprogramm in Abhängigkeit von der momentanen Dokumentationsanforderung vorgegeben werden. So kann z. B. vorgesehen sein, dass ein als "Anwender" zu kennzeichnender Benutzer nicht die Möglichkeit hat, diejenigen Teile der gespeicherten Dokumentation zu verändern, welche sich mit der technischen Detailrealisierung bestimmter Funktionen der betreffenden technischen Einrichtung beschäftigen.

In einer Weiterbildung der Erfindung ist vorgesehen, dass das Erzeugen der angepassten Dokumentationen ein Verknüpfen mit Informationen umfasst, die nicht in der technischen Dokumentation selbst enthalten sind. Hierbei kann es sich insbesondere um technische Informationen handeln, die mittels einer Datenübertragungsverbindung von einer externen Einrichtung bedarfsweise zum Rechnersystem übertragen werden. Als externe Datenquellen kommen insbesondere andere Rechnersysteme oder das Internet in Betracht.

Die Erfindung wird nachfolgend anhand von Ausführungsbeispielen mit Bezug auf die beigefügten Zeichnungen weiter beschrieben. Es stellen jeweils schematisch dar:
- Fig. 1: ein Rechnersystem zur Handhabung einer in elektronischer Form gespeicherten technischen Dokumentation gemäß einer ersten Ausführungsform,
- Fig. 2: ein Rechnersystem gemäß einer zweiten Ausführungsform, und
- Fig. 3: eine Darstellung zur Erläuterung einer Einbindung von Hinweisfunktionen in die angepasste Dokumentation in Abhängigkeit von einer momentanen Dokumentationsanforderung.

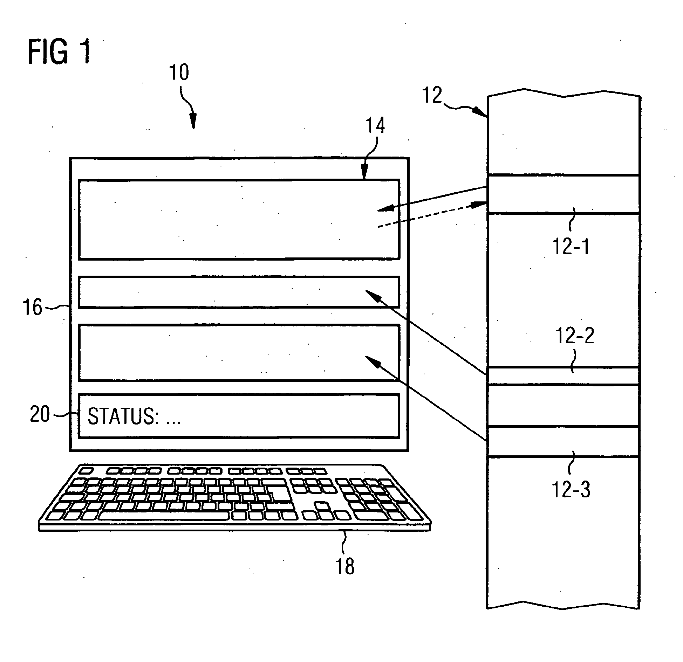

Fig. 1 zeigt eine Einrichtung zur Handhabung einer technischen Dokumentation, die sich auf ein komplexes, mikroprozessorgesteuertes Motorsteuergerät eines Kraftfahrzeugs bezieht.

Die in einer oder mehreren Dateien in einer Speichereinrichtung des Rechnersystems 10 gespeicherte Dokumentation 12 beschreibt die Funktionen des betreffenden Steuergeräts und enthält hierzu Text- und Bildinformationen.

Auf dem Rechnersystem 12 läuft ein Handhabungsprogramm ab, mittels welchem über eine MMS Dokumentationsanforderungen von einem Benutzer in das Rechnersystem 10 eingegeben werden können und mittels welchem basierend auf der eingegebenen Dokumentationsanforderung aus der gespeicherten Dokumentation 12 eine angepasste Dokumentation 14 erzeugt und über die Mensch-Maschine-Schnittstelle ausgegeben wird.

Die MMS ist im dargestellten Ausführungsbeispiel von einer Bildschirmeinrichtung 16 und einer Tastatureinrichtung 18 (sowie zu deren Verwendung vorgesehenen Systemprogrammteilen) gebildet.

Zur Handhabung der sehr umfangreichen (in Papierform etwa 9.000 Seiten umfassenden) Dokumentation 12 kann der Benutzer über die MMS 16, 18 individuelle Dokumentationsanforderungen in bildschirmgestützten Auswahldialogen eingeben. Diese Dokumentationsanforderung kann sich im dargestellten Ausführungsbeispiel z. B. auf bestimmte Funktionen bzw. Applikationen des betreffenden Motorsteuergeräts beziehen. Unabhängig davon kann der Benutzer durch die Eingabe der Dokumentationsanforderung auch seine "Rolle" (z. B. als Entwickler, Serviceperson, Anwender etc.) oder die von ihm durchzuführende Aufgabenstellung spezifizieren. Schließlich kann der Benutzer hierbei auch einen "Grad an Detailliertheit" angeben, mit welchem er die Dokumentation zu studieren wünscht.

Die wichtigsten oder sämtliche dieser Details der vom Benutzer eingegebenen Dokumentationsanforderung werden diesem sodann in einem hierfür als "Statusfeld" reservierten Bildschirmbereich 20 der Bildschirmeinrichtung 16 angegeben.

Andere Bereiche des Bildschirms 16 sind für die durch das Handhabungsprogramm gesteuerte Ausgabe der angepassten Dokumentation 14 reserviert. In der in Fig. 1 dargestellten Situation umfasst der zur Anzeige auf der Bildschirmeinrichtung 16 gebrachte Teil der angepassten Dokumentation beispielsweise 3 Informationsabschnitte 12-1, 12-2 und 12-3 der Dokumentation 12. Diese in der Speichereinrichtung des Rechnersystems 10 gespeicherten Informationen werden wie durch die Pfeile in Fig. 1 symbolisiert auf der Bildschirmeinrichtung 16 zur Anzeige gebracht.

In der dargestellten Situation entspricht die Reihenfolge dieser Dokumentationsabschnitte auf dem Bildschirm (von oben nach unten) der entsprechenden Reihenfolge dieser Dokumentationsabschnitte in der ursprünglichen Dokumentation 12. Dies ist jedoch keineswegs zwingend und die mit der angepassten Dokumentation 14 ausgegebenen Dokumentationsabschnitte können insbesondere in einer davon abweichenden Reihenfolge vorgesehen sein, die von der momentanen Dokumentationsanforderung abhängt.

Die dargestellte Einrichtung ermöglicht es dem Benutzer somit, die sehr umfangreiche Dokumentation über das Motorsteuergerät in individueller Weise, angepasst an dessen Rolle bzw. Aufgabenstellung, bequem handzuhaben. Insbesondere können für den aktuellen Benutzer bzw. die aktuelle Aufgabenstellung des Benutzers weniger relevante technische Informationen der Dokumentation 12 gewissermaßen ausgeblendet werden. Des Weiteren können abhängig von der Dokumentationsanforderung gezielte Hinweise für den Benutzer ausgegeben werden, welche die weitere Handhabung bzw. Bearbeitung der Aufgabe vereinfachen. Derartige Hinweise können im Bereich des Statusfelds 20, aber auch innerhalb der zur Anzeige gebrachten Dokumentationsabschnitte gegeben werden.

Wie es durch den in Fig. 1 gestrichelt eingezeichneten Pfeil symbolisiert ist, hat der Benutzer ferner die Möglichkeit, die Dokumentation 12 als solche zu verändern, wie dies etwa im Rahmen einer Weiterentwicklung des betreffenden Steuergeräts zweckmäßig sein kann. Diese Veränderung bzw. Modifikation der ursprünglichen Dokumentation 12 kann wiederum abhängig von der momentanen Dokumentationsanforderung eingeschränkt sein, so dass insbesondere nicht jeder Benutzer stets die Möglichkeit hat, sämtliche Teile der Dokumentation 12 zu verändern.

Bei der nachfolgenden Beschreibung von weiteren Ausführungsbeispielen werden für gleich wirkende Komponenten die gleichen Bezugszeichen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

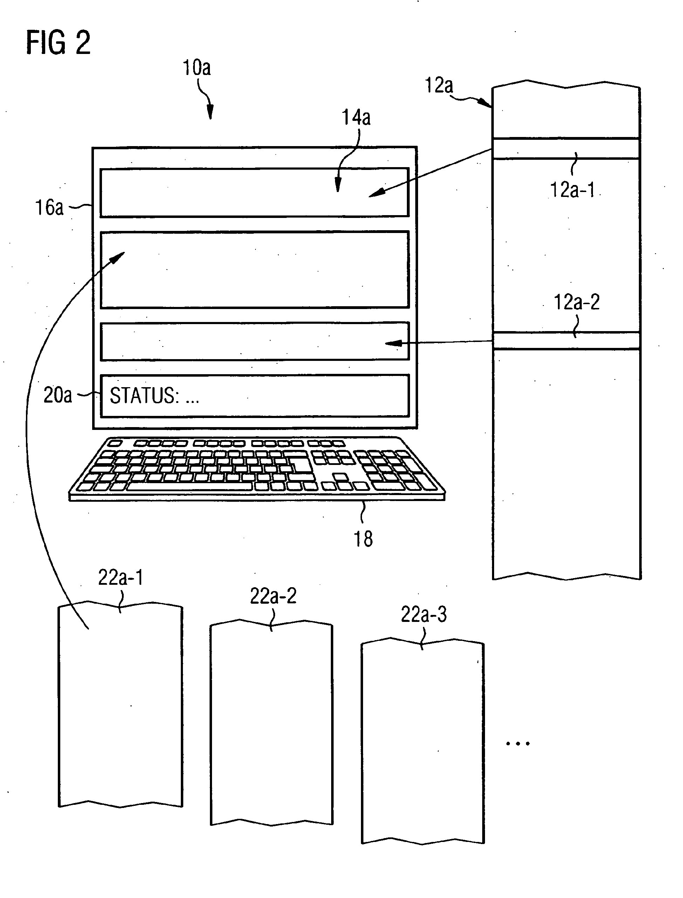

Fig. 2 veranschaulicht ein weiterentwickeltes Handhabungsverfahren am Beispiel eines Rechnersystems 10a mit einer Bildschirmeinrichtung 16a und einer Tastatureinrichtung 18a.

Wie bei dem mit Bezug auf die Fig. 1 beschriebenen Ausführungsbeispiel wird durch das auf dem Rechnersystem 10a ablaufende Handhabungsprogramm aus einer ursprünglichen Dokumentation 12a eine individuell angepasste Dokumentation 14a erzeugt und über die MMS 16a, 18a dem Benutzer bereitgestellt.

Die angepasste Dokumentation 14a enthält jedoch nicht lediglich Extrakte aus der ursprünglichen Dokumentation 12a sowie individuelle Hinweise hierzu, sondern auch "Werkzeuge" betreffend bestimmte Funktionen bzw. Applikationen des dokumentierten Motorsteuergeräts.

Derartige Werkzeuge können als Teil der Dokumentation 12a gespeichert sein oder, wie in Fig. 2 symbolisiert und mit 22a-1, 22a-2, 22a-3 bezeichnet, separat in derselben oder einer anderen Speichereinrichtung des Rechnersystems 10a gespeichert sein. Es handelt sich dabei nicht lediglich um eine fest vorgegebene, darzubietende Information wie Text- und/oder Bildinformation, sondern um programmgesteuerte, in Interaktion mit dem Benutzer tretende Darbietungen.

Die Anzahl, Art und Anordnung der Werkzeuge innerhalb der angepassten Dokumentation 14a wird von dem Handhabungsprogramm in Abhängigkeit von der Dokumentationsanforderung des Benutzers festgelegt. Mit diesen Werkzeugen können beispielsweise bestimmte technische Zusammenhänge anschaulicher dargestellt oder sogar anhand von Ein- und Ausgangsgrößen bzw. Parametern des betreffenden Motorsteuergeräts simuliert werden.

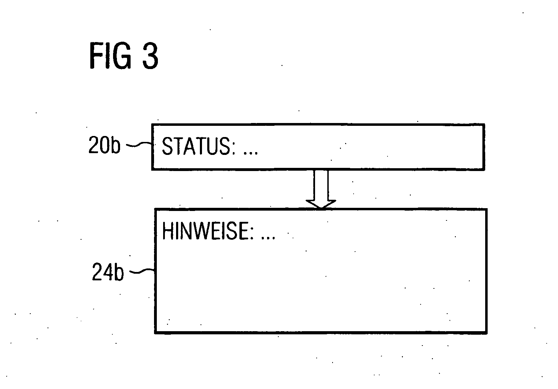

Fig. 3 veranschaulicht schließlich am Beispiel eines Statusfelds die Bereitstellung von Hinweisinformationen in einem Bereich 24b der in dieser Figur nicht dargestellten Bildschirmeinrichtung. Diese Hinweisinformationen werden in Abhängigkeit von der momentanen Dokumentationsanforderung sowie in Abhängigkeit von dem momentan auf der Bildschirmeinrichtung ersichtlichen Teil der angepassten Dokumentation erzeugt und helfen dem Benutzer bei der weiteren Bearbeitung der Fragestellung bzw. der weiteren "Navigation" durch die Dokumentation. Diese "Echtzeit-Hinweise" können wie dargestellt in einem separaten Bildschirmbereich ausgegeben werden. Alternativ oder zusätzlich kann hierfür der für die Statusinformation reservierte Bildschirmbereich genutzt werden. Ferner können solche Hinweise auch visuell innerhalb der zur Anzeige gebrachten Informationsabschnitte bedarfsweise eingeblendet werden.

## Patentansprüche

1. Verfahren zur Handhabung einer technischen Dokumentation (12) betreffend eine technische Einrichtung, die in elektronischer Form in einer Speichereinrichtung eines Rechnersystems (10) gespeichert ist, wobei ein auf dem Rechnersystem ablaufendes Handhabungsprogramm vorgesehen ist, mittels welchem über eine Mensch-Maschine-Schnittstelle (16, 18) Dokumentationsanforderungen eines Benutzers in das Rechnersystem eingebbar sind und mittels welchem basierend auf der aktuellen Dokumentationsanforderung aus der Dokumentation (12) eine angepasste Dokumentation (14) erzeugt und über die Mensch-Maschine-Schnittstelle ausgegeben wird,
**dadurch gekennzeichnet, dass** die Dokumentation (12) eine Vielzahl von Funktionen der technischen Einrichtung beschreibt und die Dokumentationsanforderung sich sowohl auf die Aufgabe und/oder Rolle des Benutzers als auch zumindest auf eine in der Dokumentation (12) beschriebene Funktion bezieht,
wobei Möglichkeiten zur Änderung der gespeicherten Dokumentation (12) vom Handhabungsprogramm vorgegeben werden und der Benutzer über die Mensch-Maschine-Schnittstelle (16, 18) die gespeicherte Dokumentation (12) dann ändern kann, wenn die betreffende Änderung vom Handhabungsprogramm in Abhängigkeit von der momentanen Dokumentationsanforderung zugelassen ist,
und/oder
wobei das Erzeugen der angepassten Dokumentationen (14) ein Verknüpfen mit wenigstens einem Programmwerkzeug (22) umfasst, welches der aktuellen Dokumentationsanforderung zugeordnet ist, zur Unterstützung des Benutzers bei der Analyse von Fragestellungen.

2. Verfahren nach Anspruch 1, wobei die Mensch-Maschine-Schnittstelle (16, 18) zur Eingabe der Dokumentationsanforderungen bildschirmgestützte Auswahldialoge bereitstellt.

3. Verfahren nach einem der vorangehenden Ansprüche, wobei das Erzeugen der angepassten Dokumentation (14) ein Ausblenden nicht benötigter Informationen aus der Dokumentation umfasst.

4. Verfahren nach einem der vorangehenden Ansprüche, wobei das Erzeugen der angepassten Dokumentation (14) ein Einblenden von zusätzlichen Statusinformationen umfasst.

5. Verfahren nach einem der vorangehenden Ansprüche, wobei das Erzeugen der angepassten Dokumentationen (14) ein Verknüpfen mit Informationen umfasst, die nicht in der technischen Dokumentation selbst enthalten sind.

6. Einrichtung zur Handhabung einer technischen Dokumentation (12) betreffend eine technische Einrichtung, umfassend ein Rechnersystem (10) mit einer Speichereinrichtung zum Speichern der technischen Dokumentation (12) in elektronischer Form, wobei ein auf dem Rechnersystem ablaufendes Handhabungsprogramm vorgesehen ist, mittels welchem über eine Mensch-Maschine-Schnittstelle (16, 18) Dokumentationsanforderungen eines Benutzers in das Rechnersystem eingebbar sind und mittels welchem basierend auf der aktuellen Dokumentationsanforderung aus der Dokumentation (12) eine angepasste Dokumentation (14) erzeugt und über die Mensch-Maschine-Schnittstelle ausgegeben wird,
**dadurch gekennzeichnet, dass** die Dokumentation (12) eine Vielzahl von Funktionen der technischen Einrichtung beschreibt und die Dokumentationsanforderung sich sowohl auf die Aufgabe und/oder Rolle des Benutzers als auch zumindest auf eine in der Dokumentation (12) beschriebene Funktion bezieht,
wobei Möglichkeiten zur Änderung der gespeicherten Dokumentation (12) vom Handhabungsprogramm vorgegeben werden und der Benutzer über die Mensch-Maschine-Schnittstelle (16, 18) die gespeicherte Dokumentation (12) dann ändern kann, wenn die betreffende Änderung vom Handhabungsprogramm in Abhängigkeit von der momentanen Dokumentationsanforderung zugelassen ist,
und/oder
wobei das Erzeugen der angepassten Dokumentationen (14) ein Verknüpfen mit wenigstens einem Programmwerkzeug (22) umfasst, welches der aktuellen Dokumentationsanforderung zugeordnet ist, zur Unterstützung des Benutzers bei der Analyse von Fragestellungen.

## Claims

1. Method for handling technical documentation (12) relating to a technical device, which documentation is stored in electronic form in a memory device of a computer system (10), a handling program which runs on the computer system being provided, which handling program can be used to input documentation requests from a user to the computer system via a man-machine interface (16, 18) and is used to produce adapted documentation (14) from the documentation (12) on the basis of the current documentation request and to output said adapted documentation via the man-machine interface,
**characterized in that** the documentation (12) describes a multiplicity of functions of the technical device, and the documentation request relates both to the task and/or role of the user and at least to a function described in the documentation (12),
possibilities for changing the stored documentation (12) being predefined by the handling program, and the user being able to change the stored documentation (12) via the man-machine interface (16, 18) when the change in question is allowed by the handling program on the basis of the current documentation request,
and/or
the process of producing the adapted documentation (14) involving linking to at least one program tool (22) which is assigned to the current documentation request in order to assist the user with analysing questions.

2. Method according to Claim 1, the man-machine interface (16, 18) providing screen-supported selection dialogues in order to input the documentation requests.

3. Method according to one of the preceding claims, the process of producing the adapted documentation (14) involving masking information which is not required from the documentation.

4. Method according to one of the preceding claims, the process of producing the adapted documentation (14) involving inserting additional status information.

5. Method according to one of the preceding claims, the process of producing the adapted documentation (14) involving linking to information which is not contained in the technical documentation itself.

6. Device for handling technical documentation (12) relating to a technical device, comprising a computer system (10) having a memory device for storing the technical documentation (12) in electronic form, a handling program which runs on the computer system being provided, which handling program can be used to input documentation requests from a user to the computer system via a man-machine interface (16, 18) and is used to produce adapted documentation (14) from the documentation (12) on the basis of the current documentation request and to output said adapted documentation via the man-machine interface,
**characterized in that** the documentation (12) describes a multiplicity of functions of the technical device, and the documentation request relates both to the task and/or role of the user and at least to a function described in the documentation (12),
possibilities for changing the stored documentation (12) being predefined by the handling program, and the user being able to change the stored documentation (12) via the man-machine interface (16, 18) when the change in question is allowed by the handling program on the basis of the current documentation request,
and/or
the process of producing the adapted documentation (14) involving linking to at least one program tool (22) which is assigned to the current documentation request in order to assist the user with analysing questions.

## Revendications

1. Procédé d'utilisation d'une documentation technique (12) concernant un dispositif technique, laquelle est mémorisée sous forme électronique dans un dispositif de mémorisation d'un système d'ordinateur (10), dans lequel est prévu un programme d'utilisation fonctionnant sur le système d'ordinateur et constituant le moyen pour entrer des demandes de documentation d'un utilisateur dans le système d'ordinateur via une interface homme-machine (16, 18) et constituant le moyen pour générer, à partir de la documentation (12), une documentation adaptée (14) qui se base sur la demande de documentation en cours et est émise via l'interface homme-machine,
**caractérisé en ce que**
la documentation (12) décrit une pluralité de fonctions du dispositif technique et **en ce que** la demande de documentation se réfère autant à l'objectif et/ou au rôle de l'utilisateur qu'à aussi, au moins, une fonction décrite dans la documentation (12),
dans lequel des possibilités pour modifier la documentation mémorisée (12) sont prédéterminées par le programme d'utilisation et dans lequel l'utilisateur peut modifier la documentation mémorisée (12) via l'interface homme-machine (16, 18) lorsque la modification concernée est autorisée, en fonction de la demande de documentation en cours, par le programme d'utilisation
et/ou
dans lequel la génération de documentations adaptées (14) comporte une association à au moins un outil du programme (22) qui est attribué à la demande de documentation en cours pour aider l'utilisateur dans l'analyse de questions.

2. Procédé selon la revendication 1, dans lequel l'interface homme-machine (16, 18) met à disposition des dialogues de sélection s'affichant moyennant l'écran et permettant l'entrée des demandes de documentation.

3. Procédé selon l'une quelconque des revendications précédentes, dans lequel la génération de la documentation adaptée (14) comprend un masquage des informations de la documentation qui ne sont pas nécessaires.

4. Procédé selon l'une quelconque des revendications précédentes, dans lequel la génération de la documentation adaptée (14) comprend un affichage, à l'écran, d'informations d'état supplémentaires.

5. Procédé selon l'une quelconque des revendications précédentes, dans lequel la génération des documentations adaptées (14) comporte une association à des informations qui ne sont pas contenues dans la documentation technique elle-même.

6. Dispositif d'utilisation d'une documentation technique (12) concernant un dispositif technique, comprenant un système d'ordinateur (10) avec un dispositif de mémorisation pour mémoriser la documentation technique (12) sous forme électronique, dans lequel est prévu un programme d'utilisation fonctionnant sur le système d'ordinateur et constituant le moyen pour entrer des demandes de documentation d'un utilisateur dans le système d'ordinateur via une interface homme-machine (16, 18) et constituant le moyen pour générer, à partir de la documentation (12) une documentation adaptée (14) qui se base sur la demande de documentation en cours et est émise via l'interface homme-machine,
**caractérisé en ce que**
la documentation (12) décrit une pluralité de fonctions du dispositif technique et **en ce que** la demande de documentation se réfère autant à l'objectif et/ou au rôle de l'utilisateur qu'à aussi, au moins, une fonction décrite dans la documentation (12),
dans lequel des possibilités pour modifier la documentation mémorisée (12) sont prédéterminées par le programme d'utilisation et dans lequel l'utilisateur peut modifier la documentation mémorisée (12) via l'interface homme-machine (16, 18) lorsque la modification concernée est autorisée, en fonction de la demande de documentation en cours, par le programme d'utilisation
et/ou
dans lequel la génération des documentations adaptées (14) comporte une association à au moins un outil du programme (22) qui est attribué à la demande de documentation en cours pour aider l'utilisateur dans l'analyse de questions.
